# EUROPÄISCHE PATENTSCHRIFT

(11) **EP 4 327 912 B1**
(45) Veröffentlichungstag und Bekanntmachung des Hinweises auf die Patenterteilung: **30.07.2025**
(21) Anmeldenummer: 22191504.4
(22) Anmeldetag: 22.08.2022
(51) Int. Cl.: B01D 45/12, B01D 45/16, B04C 3/06

(54) **WASSERABSCHEIDER SOWIE ENERGIEUMWANDLUNGSANLAGE UMFASSEND EINE BRENNSTOFFZELLE UND EINEN WASSERABSCHEIDER**
WATER SEPARATOR AND ENERGY CONVERSION INSTALLATION COMPRISING A FUEL CELL AND A WATER SEPARATOR
SÉPARATEUR D'EAU, AINSI QU'INSTALLATION DE TRANSFORMATION D'ÉNERGIE COMPRENANT UNE PILE À COMBUSTIBLE ET UN SÉPARATEUR D'EAU

(43) Veröffentlichungstag der Anmeldung: 28.02.2024
(73) Patentinhaber: FISCHER Fuel Cell Compressor AG, 3360 Herzogenbuchsee (CH)
(72) Erfinder: Minder, Christian, 3360 Herzogenbuchsee (CH); Kunz, Daniel, 3360 Herzogenbuchsee (CH); Stieger, Werner, 3360 Herzogenbuchsee (CH); Fischer, Tore, 3360 Herzogenbuchsee (CH); Yogendran, Thasiv, 3360 Herzogenbuchsee (CH); Aerni, Till, 3360 Herzogenbuchsee (CH)
(74) Vertreter: Hepp Wenger Ryffel AG

(56) Entgegenhaltungen:
- CN-A- 105 148 623
- DE-A1- 2 336 278
- DE-A1- 2 411 801
- JP-A- 2010 104 906
- US-A1- 2020 277 919

## Beschreibung

Die vorliegende Erfindung betrifft einen Wasserabscheider sowie eine Energieumwandlungsanlage umfassend eine Brennstoffzelle und einen Wasserabscheider.

Wasserabscheider sind Vorrichtungen zum Abscheiden von Wasser. Energiewandlungsanlagen mit Brennstoffzellen arbeiten häufig mit hohen Temperaturen bis 200°C und hohen Drücken bis 5 bar. Um eine Brennstoffzelle effizient zu betreiben, sind solche hohe Drücke notwendig. Die Drücke werden mittels eines Luftverdichters erreicht, der im Zuluftstrom der Brennstoffzelle angeordnet ist und die Zuluft verdichtet. Der Luftverdichter benötigt Energie. Um die Effizienz zu steigern kann Energie aus dem Abgasstrom gewonnen werden. Es ist beispielsweise möglich, dass in dem Abgasstrom eine Gasturbine angeordnet ist, welche auf derselben Welle angeordnet ist wie der Luftverdichter. So kann Energie von dem Abgasstrom über die Gasturbine und die Welle auf den Luftverdichter übertragen werden.

Die Brennstoffzelle produziert neben elektrischem Strom auch Wasser, welches über den Abgasstrom abgeführt wird. Das Wasser im Abgasstrom liegt oft in Tropfenform vor. Die Wassertropfen weisen eine hohe Geschwindigkeit auf und treffen so auf die Gasturbine. Durch die Beaufschlagung mit Wassertropfen mit hoher Geschwindigkeit kann die Gasturbine beschädigt werden oder rasch verschleissen.

Am effektivsten kann der Verschleiss oder die Beschädigung der Gasturbine verlangsamt bzw. hinausgezögert werden, indem die Wassertropfen aus dem Abgasstrom entfernt werden. Dies geschieht mittels eines Wasserabscheiders.

CN 105148623 A, DE 2411801 A1, JP 2010104906 A und DE 2336278 A1 beschreiben unterschiedliche Flüssigkeitsabscheider.

Des Weiteren beschreibt US 2020277919 A1 einen Flüssigkeitsabscheider, der ein Einlassrohr und ein Innenrohr umfasst.

Wasserabscheider sind aus dem Stand der Technik bekannt. Bekannt sind Wasserabscheider, welche den Abgasstrom mittels Leitschaufeln in Rotation versetzen. Die Fliehkraft drückt die Wassertropfen nach aussen, wobei die Wassertropfen anschliessend über einen Abscheidekanal abgeschieden werden.

US 4,985,058 offenbart einen Partikelabscheider, welcher einen Gasstrom mit einer Verwirbelungsvorrichtung verwirbelt, wobei Partikel in dem Gasstrom von der Fliehkraft nach aussen gedrückt und anschliessend mittels eines Abscheidekanals abgeschieden werden und danach über eine Austrittsöffnung austreten.

Auch US 2010/0275561 A1 offenbart einen Partikelabscheider, welcher nach diesem Prinzip arbeitet.

Solche Partikelabscheider weisen einen Abscheidekanal auf. Wassertropfen befinden sich oft an einer Innenwand des Rohrs. Solche Wassertropfen an der Innenwand werden von den Wasserabscheidern nach dem Stand der Technik zunächst verwirbelt und anschliessend teilweise abgeschieden. Dieser Prozess ist jedoch ineffizient, weil eine nicht zu vernachlässigende Teilmenge der verwirbelten Wassertropfen nicht abgeschieden wird, sondern in dem Gasstrom verbleibt.

Es ist die Aufgabe der Erfindung, die Nachteile des Stands der Technik zu überwinden und insbesondere einen Wasserabscheider sowie eine Energieumwandlungsanlage umfassend einen Wasserabscheider zu schaffen, welche robust und effizient ist und insbesondere einen Grossteil des Wassers abscheiden.

Die Aufgabe wird durch einen Wasserabscheider sowie eine Energieumwandlungsanlage gemäss den unabhängigen Patentansprüchen gelöst.

Insbesondere wird die Aufgabe durch einen Wasserabscheider, welcher einen durch eine Wandung definierten Strömungskanal mit einem Einlass und einen Auslass umfasst, gelöst. Durch den Strömungskanal ist ein Wasser enthaltender Kanalgasstrom von dem Einlass zu dem Auslass hindurchführbar. Der Wasserabscheider weist einen ersten Abscheidekanal mit einer ersten Eintrittsöffnung und einen zweiten Abscheidekanal mit einer zweiten Eintrittsöffnung auf. Die erste Eintrittsöffnung und die zweite Eintrittsöffnung sind an der Innenseite der Wandung des Strömungskanals ausgebildet.

Durch die erste Eintrittsöffnung des ersten Abscheidekanals ist es möglich, Wassertropfen, welche sich an der inneren Wandung des Strömungskanals befinden, abzuscheiden. Ein solcher Wasserabscheider mit zwei Abscheidekanälen arbeitet somit besonders effizient.

Der Wasserabscheider kann aus Kunststoff oder Metall gefertigt sein. Es ist auch möglich, dass der Wasserabscheider aus anderen Materialien oder aus einem Verbundwerkstoff gefertigt ist. Auch der Einsatz verschiedener Materialien, beispielsweise für verschiedene Bauteile, ist denkbar.

Der Strömungskanal kann im Querschnitt kreisrund oder oval ausgebildet sein. Es ist möglich, dass der Innenraum des Strömungskanals mehrere Abschnitte aufweist, welche unterschiedlich geformt sind. Es ist möglich, dass der Innenraum des Strömungskanals abschnittsweise im Wesentlichen die Form eines Kegelstumpfes oder eines Zylinders aufweist.

Der Einlass und/oder der Auslass können an der Innenwand oder an der Aussenwand eine Gummilippe aufweisen, durch welche der Wasserabscheider im Wesentlichen gasdicht an ein Rohr montierbar ist. Der Wasserabscheider kann auf das Rohr gesteckt oder in das Rohr gesteckt werden. Es ist möglich, dass der Wasserabscheider mittels Rohrschellen oder Schlauchschellen befestigt ist. Es ist möglich, dass der Einlass und/oder der Auslass des Wasserabscheiders an der Innenwand oder an der Aussenwand eine Gummilippe aufweist und zusätzlich mittels einer Rohrschelle oder einer Schlauchschelle befestigt ist. Dann drückt die Rohrschelle bzw. die Schlauchschelle die Gummilippe gegen ein Rohr, an welchem der Wasserabscheider montiert ist, und der Wasserabscheider ist einfach, stabil und lösbar befestigt.

Der Wasser enthaltende Kanalgasstrom kann vollständig mit Wasser gesättigte Luft enthalten. Es ist auch möglich, dass der Wasser enthaltende Kanalgasstrom Wasser in Form von Wassertropfen oder in Form eines Wasserschwalls enthält. Das grösste Volumen des Kanalgasstroms wird jedoch von einem Gas eingenommen. Das Gas kann im Wesentlichen Luft sein.

Die erste Eintrittsöffnung und/oder die zweite Eintrittsöffnung können ringförmig in der Innenseite der Wandung des Strömungskanals ausgebildet sein. Es ist möglich, dass die erste Eintrittsöffnung und/oder die zweite Eintrittsöffnung über den vollen Umfang der Innenseite der Wandung des Strömungskanals ausgebildet sind. Es ist auch möglich, dass die erste Eintrittsöffnung und/oder die zweite Eintrittsöffnung nur über Teile, beispielsweise Kreissegmente, der Innenseite der Wandung des Strömungskanals ausgebildet sind. Die erste Eintrittsöffnung und die zweite Eintrittsöffnung können im Wesentlichen gleich bzw. kongruent geformt sein.

Erfindungsgemäss ist die erste Eintrittsöffnung des Wasserabscheiders stromaufwärts von der zweiten Eintrittsöffnung angeordnet, wobei der zweite Abscheidekanal durch eine zweite Austrittsöffnung in den ersten Abscheidekanal mündet.

Durch eine solche Anordnung der ersten Eintrittsöffnung und der zweiten Eintrittsöffnung ist es möglich, das Wasser in einem mehrstufigen Prozess abzuscheiden. Durch den mehrstufigen Prozess kann besonders viel Wasser abgeschieden werden und der Wasserabscheider arbeitet sehr effizient. Durch die Mündung der zweiten Austrittsöffnung in den ersten Abscheidekanal kann das Wasser des ersten Abscheidekanals und das Wasser des zweiten Abscheidekanals zusammengeführt werden. Somit kann das Wasser des ersten Abscheidekanals und das Wasser des zweiten Abscheidekanals anschliessend zusammen abgeführt werden. Dies macht den Wasserabscheider baulich besonders einfach.

Die erste Eintrittsöffnung kann radial weiter beabstandet von einer Längsachse des Strömungskanals angeordnet sein als die zweite Eintrittsöffnung. Die Längsachse des Strömungskanals ist die Achse in Richtung der grössten Ausdehnung des Strömungskanals. Es ist auch möglich, dass die erste Eintrittsöffnung und die zweite Eintrittsöffnung radial von der Längsachse des Strömungskanals im Wesentlichen den gleichen Abstand aufweisen. Die zweite Austrittsöffnung kann ringförmig ausgebildet sein. Die zweite Austrittsöffnung kann auch oval geformt sein. Es ist möglich, dass die zweite Austrittöffnung über den gesamten Umfang des Strömungskanals ausgebildet ist. Es ist möglich, dass die zweite Austrittsöffnung nur über Teile bzw. Segmente des Umfangs des Strömungskanals ausgebildet ist.

Zwischen der ersten Eintrittsöffnung und der zweiten Eintrittsöffnung kann in dem Strömungskanal mindestens ein Umlenkelement ausgebildet sein. Durch das mindestens eine Umlenkelement können Wassertropfen lenkbar sein. Die Wassertropfen können durch das eine Umlenkelement in Richtung der zweiten Eintrittsöffnung lenkbar sein.

Durch ein solches Umlenkelement kann das Wasser gezielt in Richtung der zweiten Eintrittsöffnung gelenkt werden. Somit kann mehr Wasser abgeschieden werden und die Effizienz des Wasserabscheiders wird verstärkt.

Die Umlenkelemente können den Kanalgasstrom in eine Rotation versetzen. Durch die Anordnung des Umlenkelements zwischen der ersten Eintrittsöffnung und der zweiten Eintrittsöffnung ist es möglich, dass die erste Eintrittsöffnung Wassertropfen aufnimmt, welche sich an der Innenwand des Strömungskanals befinden. Zusätzlich dazu wird der Kanalgasstrom stromabwärts der ersten Eintrittsöffnung durch das Umlenkelement in Richtung der zweiten Eintrittsöffnung gelenkt und die Fliehkraft drückt Wassertropfen, welche sich in dem Kanalgasstrom befinden, in Richtung der zweiten Eintrittsöffnung. Somit überlagern sich in dem Wasserabscheider zwei Effekte. Zunächst werden an der Innenwandung des Strömungskanals befindliche Wassertropfen abgeschieden und anschliessend werden Wassertropfen abgeschieden, welche sich im zentralen Bereich des Kanalgasstroms befinden. An der Innenwandung des Strömungskanals befindliche Wassertropfen werden somit direkt durch die erste Eintrittsöffnung in den ersten Abscheidekanal abgeschieden und nicht mittels des Umlenkelements umgelenkt. Der Wasserabscheider arbeitet somit in zwei Stufen. Dies macht den Wasserabscheider besonders effizient.

Es ist möglich, dass mehrere Umlenkelemente im Strömungskanal ausgebildet sind. Es können ein, zwei, drei, vier, fünf, sechs oder mehr Umlenkelemente im Strömungskanal ausgebildet sein, wobei drei bzw. vier Umlenkelemente besonders bevorzugt sind. Die Umlenkelemente können aus Metall, Kunststoff oder einem Verbundwerkstoff bestehen. Auch andere Materialien sind denkbar. Es ist möglich, dass die Umlenkelemente lösbar befestigt sind. Dann können die Umlenkelemente im Falle eines Defekts rasch ausgetauscht werden. Es ist möglich, dass alle Umlenkelemente stoffschlüssig verbunden sind und gemeinsam lösbar in dem Strömungskanal ausgebildet sind. Dann können alle Umlenkelemente gemeinsam im Falle eines Defekts ausgetauscht werden. Die Umlenkelemente können jeweils bogenförmig oder im Wesentlichen als Platte geformt sein.

Es ist möglich, dass die Umlenkelemente beweglich in dem Strömungskanal ausgebildet sind. Dann kann der Anstellwinkel der Umlenkelemente, beispielsweise abhängig von der Strömungsgeschwindigkeit des Kanalgasstroms, variiert werden. So kann der Umlenkeffekt auf die jeweilige Strömungsgeschwindigkeit angepasst werden und der Wasserabscheider kann bei verschiedenen Strömungsgeschwindigkeiten effizient arbeiten. Der Anstellwinkel der Umlenkelemente kann manuell durch einen Techniker oder automatisch mittels Aktuatoren verändert werden. Es ist möglich, dass in dem Strömungskanal Sensoren angeordnet sind, welche die Strömungsgeschwindigkeit messen. Dann kann anhand der Messwerte der Sensoren der Anstellwinkel der Umlenkelemente angepasst und optimiert werden.

Es ist möglich, dass der Bereich des Strömungskanals zwischen der ersten Eintrittsöffnung und der zweiten Eintrittsöffnung im Wesentlichen zylinderförmig oder kegelstumpfförmig ausgebildet ist. Der erste Abscheidekanal kann zumindest teilweise um den Bereich des Strömungskanals mit dem Umlenkelement angeordnet sein. Der erste Abscheidekanal kann ringförmig um den Bereich des Strömungskanals mit dem Umlenkelement angeordnet sein.

Durch eine solche Anordnung ist der Wasserabscheider besonders robust und kompakt ausgebildet. Durch eine ringförmige Anordnung des ersten Abscheidekanals um den Bereich des Strömungskanals zwischen der ersten Eintrittsöffnung und der zweiten Eintrittsöffnung kann der erste Abscheidekanal bei einer kompakten Bauweise einen grossen Querschnitt für die Abscheidung von Wasser aufweisen. Somit kann der Wasserabscheider bei einer äusserst kompakten Bauart viel Wasser abscheiden.

Die Kegelstumpfform kann stromabwärts zulaufen oder stromabwärts erweitert ausgebildet sein. Ringförmig bedeutet, dass der erste Abscheidekanal zumindest teilweise ringförmig ausgebildet ist. Es ist selbstverständlich möglich, dass in dem ersten Abscheidekanal Stege, Leisten oder andere Verbindungen zwischen mehreren Wandungen des Wasserabscheiders ausgebildet sind.

Der erste Abscheidekanal kann eine erste Austrittsöffnung aufweisen. Der erste Abscheidekanal kann im Bereich der ersten Eintrittsöffnung einen grösseren Querschnitt aufweisen als im Bereich der ersten Austrittsöffnung.

Durch einen grossen Querschnitt des ersten Abscheidekanals im Bereich der ersten Eintrittsöffnung kann der erste Abscheidekanal durch die erste Eintrittsöffnung eine grosse Menge an Wasser bzw. eine grosse Anzahl an Wassertropfen aufnehmen. Durch den grösseren Querschnitt des ersten Abscheidekanals im Bereich der ersten Eintrittsöffnung als im Bereich der ersten Austrittsöffnung kann der erste Abscheidekanal düsenförmig zulaufen. Dadurch wird gewährleistet, dass das Wasser, welches im ersten Abscheidekanal gesammelt wird, durch die erste Austrittsöffnung gesammelt und präzise und gebündelt abgegeben werden kann.

Die Querschnittsfläche des ersten Abscheidekanals im Bereich der ersten Austrittsöffnung kann im Wesentlichen 50 Prozent, 20 Prozent oder weniger betragen als die Querschnittsfläche des Abscheidekanals im Bereich der ersten Eintrittsöffnung. Auch ändere Verhältnisse zwischen der Querschnittsfläche des ersten Abscheidekanals im Bereich der ersten Austrittsöffnung und der Querschnittsfläche des ersten Abscheidekanals im Bereich der ersten Eintrittsöffnung sind denkbar.

Erfindungsgemäss mündet der erste Abscheidekanal durch eine Umlaufkanalöffnung in einen Umlaufkanal, wobei der Umlaufkanal zumindest teilweise um den Strömungskanal verläuft.

Durch das Münden der zweiten Austrittsöffnung in den ersten Abscheidekanal wird das abgeschiedene Wasser sowohl aus dem ersten Abscheidekanal als auch aus dem zweiten Abscheidekanal stromabwärts in dem ersten Abscheidekanal gesammelt. Durch das Münden des ersten Abscheidekanals durch eine Umlaufkanalöffnung in den Umlaufkanal wird somit das gesamte abgeschiedene Wasser in dem Umlaufkanal gesammelt. Dadurch, dass der Umlaufkanal um den Strömungskanal verläuft, kann das abgeschiedene Wasser bei einer kompakten Bauart des Wasserabscheiders präzise in dem Umlaufkanal gesammelt werden.

Die Querschnittsfläche des Umlaufkanals kann im Wesentlichen 40 Prozent, 30 Prozent oder weniger der Querschnittsfläche des Strömungskanals ausmachen. Auch andere Verhältnisse zwischen der Querschnittsfläche des Umlaufkanals und der Querschnittsfläche des Strömungskanals sind denkbar. Der Umlaufkanal kann mittels einer verklebten Fuge an den Strömungskanal angeklebt sein. Es ist auch möglich, dass der Umlaufkanal mittels Schweissen an dem Strömungskanal angebracht ist. Der Umlaufkanal kann lösbar, beispielsweise mittels Schrauben, an dem Strömungskanal angebracht sein. Dies hat den Vorteil, dass der Umlaufkanal für eine Wartung, Kontrolle oder Reparatur des Wasserabscheiders entfernt und anschliessend wieder angebracht werden kann.

Es ist möglich, dass der Umlaufkanal eine Längsachse aufweist, die zumindest teilweise auf einer Ebene verläuft, welche die Längsachse des Strömungskanals im Wesentlichen senkrecht schneidet.

Erfindungsgemäss ist durch den ersten Abscheidekanal ein erster Gasstrom leitbar, und durch den zweiten Abscheidekanal ist ein zweiter Gasstrom leitbar. Zudem ist die zweite Austrittsöffnung so ausgebildet, dass durch die zweite Austrittsöffnung der zweite Gasstrom so leitbar ist, dass durch den zweiten Gasstrom der erste Gasstrom in Richtung der Umlaufkanalöffnung ablenkbar ist.

Der erste Gasstrom enthält Wassertropfen. Durch die Ablenkung des ersten Gasstroms durch den zweiten Gasstrom in Richtung der Umlaufkanalöffnung werden somit auch die Wassertropfen in Richtung der Umlaufkanalöffnung geleitet. Somit ist es äusserst unwahrscheinlich, dass Wassertropfen aus dem ersten Abscheidekanal durch die zweite Austrittsöffnung und die zweite Eintrittsöffnung wieder in den Strömungskanal gelangen. Vielmehr wird der Effekt des ersten Abscheidekanals durch den zweiten Gasstrom in dem zweiten Abscheidekanal verstärkt. Zusätzlich zu der Anordnung von zwei Abscheidekanälen in dem Wasserabscheider sind der erste Abscheidekanal und der zweite Abscheidekanal somit so angeordnet, dass sie sich gegenseitig in ihrem Effekt verstärken. Dadurch ergibt sich eine äussert grosse Wirksamkeit des Wasserabscheiders.

Die zweite Austrittsöffnung kann verengt oder erweitert ausgebildet sein. Die zweite Austrittsöffnung kann als Düse ausgebildet sein. Es ist möglich, dass die zweite Austrittsöffnung Lenkungselemente wie beispielsweise Schaufeln oder Platten enthält, welche den zweiten Gasstrom lenken.

Der Umlaufkanal kann schneckenförmig ausgebildet sein. Der Krümmungsradius des Umlaufkanals kann zumindest teilweise entlang der Strömungsrichtung des Umlaufkanals mit in Strömungsrichtung voranschreitender Ausdehnung des Umlaufkanals grösser ausgebildet sein als in einem Bereich entgegen der Strömungsrichtung.

Durch eine solche Anordnung kann der Gasstrom vorteilhaft abgeführt werden.

Der Umlaufkanal kann einen ersten Volutenkanal und einen zweiten Volutenkanal aufweisen. Der erste Volutenkanal und der zweite Volutenkanal können so ausgebildet sein, dass sie im Betrieb des Wasserabscheiders eine im Wesentlichen gleiche Druckverteilung aufweisen.

Durch den ersten Volutenkanal und den zweiten Volutenkanal kann das abgeschiedene Wasser vorteilhaft abgeführt werden.

Ein Volutenkanal ist ein Kanal, welcher einen Krümmungsradius aufweist, der mit entlang der Strömungsrichtung voranschreitender Ausdehnung des Volutenkanals zumindest teilweise grösser ist als in einem Bereich entgegen der Strömungsrichtung.

Die Umlaufkanalöffnung mündet in den ersten Volutenkanal. Durch die Schneckenform des ersten Volutenkanals und des zweiten Volutenkanals wird der Gasstrom teilweise in den ersten Volutenkanal geleitet und teilweise in den zweiten Volutenkanal geleitet. Es ist möglich, dass der erste Volutenkanal und der zweite Volutenkanal eine schlitzförmige Verbindung aufweisen. Die schlitzförmige Verbindung zwischen dem ersten Volutenkanals und dem zweiten Volutenkanal kann im Wesentlichen V-förmig zulaufend ausgebildet sein.

Es ist möglich, dass der erste Volutenkanal auf einem Kreissegment von im Wesentlichen 180° um den Strömungskanal ausgebildet ist.

Es ist möglich, dass von dem ersten Volutenkanal zu dem zweiten Volutenkanal mehrere Durchlässe ausgebildet sind. Die Durchlässe können kreisrund ausgebildet sein.

Es ist möglich, dass der Gasstrom zumindest teilweise mehrfach in dem ersten Volutenkanal um den Strömungskanal strömt und sich so ein erster Volutenkanalgasstrom bildet. Der erste Volutenkanalgasstrom trifft somit auf den Gasstrom, welcher durch die Umlenkelemente in Rotation versetzt wird und durch die Umlaufkanalöffnung in den ersten Volutenkanal strömt. Dadurch wird der Gasstrom, welcher durch die Umlaufkanalöffnung in den ersten Volutenkanal tritt, zusätzlich durch das Zusammentreffen mit dem ersten Volutenkanalgasstrom in Rotation versetzt. Dadurch wird die Rotation, welche durch die Umlenkelemente ausgelöst wird, verstärkt. Die Umlenkelemente und der erste Volutenkanal ergänzen sich somit und verstärken sich gegenseitig in ihrem Effekt.

Es ist möglich, dass die Umlaufkanalöffnung so ausgebildet ist, dass sie die Rotation des Gasstroms unterstützt bzw. verstärkt. Dafür können im Bereich der Umlaufkanalöffnung weitere Umlenkelemente, beispielsweise Schaufeln, angeordnet sein. Im ersten Volutenkanal wird der Gasstrom teilweise und im zweiten Volutenkanal wird der Gasstrom komplett in einen Bereich in dem Umlaufkanal gelenkt, in dem sich der erste Volutenkanal und der zweite Volutenkanal vereinen. Stromabwärts dieses Bereiches ist der Umlaufkanal zumindest teilweise nichtmehr unterteilt. Bei einer im Wesentlichen horizontalen Anordnung der Längsachse des Strömungskanals kann der Umlaufkanal in dem Bereich, in dem der erste Volutenkanal und der zweite Volutenkanal zusammengeführt werden, eine Längsachse aufweisen, die im Wesentlichen vertikal ausgebildet ist.

Der zweite Volutenkanal kann radial weiter aussen von einer Längsachse des Strömungskanals ausgebildet sein als der erste Volutenkanal.

Dadurch kann eine Rückströmung des Wassers von dem ersten Volutenkanal oder zweiten Volutenkanal in den Strömungskanal verhindert werden. Der zweite Volutenkanal kann so ausgebildet sein, dass Wasser, welches sich in dem zweiten Volutenkanal befindet, zwingend in den Umlaufkanal geleitet wird. Das Wasser wird somit in den ersten Volutenkanal geleitet und strömt anschliessend von dem ersten Volutenkanal in den zweiten Volutenkanal. Von dem zweiten Volutenkanal wird das Wasser in den Umlaufkanal geleitet. Es ist möglich, dass das Wasser von dem ersten Volutenkanal in den Umlaufkanal gelangt, ohne den zweiten Volutenkanal zu passieren.

Es ist auch möglich, dass der zweite Volutenkanal radial im Wesentlichen den gleichen Abstand von der Längsachse des Strömungskanals aufweist wie der erste Volutenkanal. Dann ist der zweite Volutenkanal in der Richtung der Längsachse des Strömungskanals weiter stromabwärts des Strömungskanals angeordnet als der erste Volutenkanal.

Durch eine solche Anordnung des ersten Volutenkanals und des zweiten Volutenkanals ist eine besonders kompakte Bauform des Wasserabscheiders möglich.

Der Umlaufkanal kann in den Strömungskanal münden.

Dadurch werden sämtliche Gasströme, die durch den Wasserabscheider strömen, wieder zusammengeführt. Durch das Zusammenführen des Gasstroms aus dem Umlaufkanal und dem Kanalgasstrom kann eine Gasturbine, die stromabwärts des Wasserabscheiders angeordnet ist, sowohl mit dem Gasstrom aus dem Umlaufkanal als auch mit dem Kanalgasstrom beaufschlagt werden. Durch eine Rückführung des Gasstroms aus dem Umlaufkanal in den Strömungskanal kann somit auch die kinetische Energie des Gasstroms aus dem Umlaufkanal genutzt werden. Bei einem blossen Abführen des Gasstroms aus dem Umlaufkanal mit dem darin enthaltenen Wasser wäre das nicht möglich. Durch eine Rückführung des Gasstroms des Umlaufkanals in den Strömungskanal wird somit die kinetische Energie der Gasströme weitgehend erhalten. Somit kann die Gasturbine sowohl die kinetische Energie des Gasstroms aus dem Umlaufkanal als auch die kinetische Energie des Kanalgasstroms zumindest teilweise in mechanische Energie umwandeln. Die kinetische Energie kann somit von einer Gasturbine, die sich stromabwärts des Gasabscheiders befindet, vorteilhaft genutzt werden. Dadurch wird die Effizienz einer Anlage, welche einen solchen Wasserabscheider aufweist, erhöht.

Der Umlaufkanal kann orthogonal in den Strömungskanal münden. Vorteilhaft mündet der Umlaufkanal so in den Strömungskanal, dass sowohl der Kanalgasstrom als auch der Gasstrom aus dem Umlaufkanal zumindest anteilig in dieselbe Richtung verlaufen. Damit kann ein Unterdruck an der Mündung erzeugt werden, welche die Funktion verbessert und Druckverluste mindert. Dies kann beispielsweise erreicht werden, indem der Strömungskanal und der Umlaufkanal beim Zusammentreffen Längsachsen aufweisen, die sich im Wesentlichen unter einem 45°-Winkel schneiden. Dann wird der Gasstrom aus dem Umlaufkanal durch den Kanalgasstrom mitgerissen. Somit ergibt sich ein vorteilhaftes Zusammenwirken des Kanalgasstroms und des Gasstroms aus dem Umlaufkanal.

An den Umlaufkanal kann ein Wasserseparator angeschlossen sein.

Ein Wasserseparator ist eine Vorrichtung zum Separieren von Wasser aus einem Gasstrom. Durch einen solchen Wasserseparator kann das Wasser, welches mittels des Wasserabscheiders abgeschieden und mit dem Gasstrom in den Umlaufkanal geleitet wurde, aus dem Gasstrom in dem Umlaufkanal abgeschieden werden. Bei der Mündung des Umlaufkanals in den Strömungskanal ist der Gasstrom aus dem Umlaufkanal somit im Wesentlichen von Wassertropfen befreit. Dadurch ergibt sich stromabwärts der Mündung des Umlaufkanals in den Strömungskanal ein Kanalgasstrom, welcher keine Wesentlichen flüssigen Bestandteile wie Wassertropfen enthält. Ein solcher Kanalgasstrom kann vorteilhaft auf eine Gasturbine geleitet werden und eine so beaufschlagte Gasturbine kann verschleissarm und damit wartungsarm betrieben werden.

Der Wasserabscheider kann so ausgebildet sein, dass in dem Umlaufkanal ein kleinerer Massenstrom strömt als in dem Strömungskanal. Der Massenstrom in dem Umlaufkanal kann beispielsweise 20 Prozent oder weniger des Massenstroms in dem Strömungskanal betragen. Ausserdem kann die Strömungsgeschwindigkeit in dem Umlaufkanal geringer sein als in dem Strömungskanal und der Wasseranteil kann in dem Umlaufkanal höher sein als in dem Strömungskanal. Dies sorgt dafür, dass der Wasserseparator das Wasser vorteilhaft und effizient von dem Gasstrom in dem Umlaufkanal separieren kann. Der Wasserseparator kann beispielsweise als Lamellenwasserseparator ausgebildet sein.

Der Wasserseparator ist bevorzugt auf einem niedrigeren Niveau als der Wasserabscheider angeordnet. Dann übt die Schwerkraft auf die Wassertropfen, welche sich im Gasstrom auf einem höheren Niveau befindet als der Wasserseparator, eine Kraft auf die Wassertropfen aus, die zumindest teilweise in Richtung des Wasserseparators wirkt. Es ist möglich, dass zumindest eine Komponente des Massenstroms in dieselbe Richtung wirkt wie die Schwerkraft. Dann übt sowohl die Schwerkraft als auch der Massenstrom eine Kraft auf die Wassertropfen aus, die zumindest teilweise in Richtung des Wasserseparators wirkt. Dadurch wird die Wirkung des Wasserseparators verstärkt.

Der Wasserseparator kann einen Wasserablass aufweisen. Der Wasserablass kann unverstellbar oder verstellbar ausgebildet sein. Verstellbar bedeutet, dass durch eine Verstellung einer Verstellvorrichtung bestimmt werden kann, wieviel Wasser durch den Wasserablass pro Zeiteinheit abgelassen wird. Es ist möglich, dass durch eine Verstellung des Wasserablasses des Wasserseparators die Wassermenge, welche durch den Wasserabscheider abgeschieden wird, beeinflusst wird.

Stromaufwärts des Einlasses kann ein Einsatz ausgebildet sein, durch welchen der Kanalgasstrom im Wesentlichen laminar in den Einlass leitbar ist.

Durch einen laminaren Luftstrom ist es äusserst unwahrscheinlich, dass sich Wassertropfen, welche sich an der inneren Wandung des Strömungskanals befinden, herabfallen oder anderweitig in den zentralen Bereich des Kanalgasstroms gelangen. Die Wassertropfen, welche sich an der inneren Wand des Strömungskanals befinden, verbleiben somit mit einer hohen Wahrscheinlichkeit an der inneren Wandung des Strömungskanals. Dadurch werden die Wassertropfen mit einer hohen Wahrscheinlichkeit durch die erste Eintrittsöffnung und den ersten Abscheidekanal abgeschieden. Ausserdem wird das Umlenkelement durch einen im Wesentlichen laminaren Luftstrom kontrolliert angeströmt und durch eine Anordnung der Umlenkelemente kann ein wiederholbares, befriedigendes Ergebnis erzielt werden. Dadurch kann die zweite Eintrittsöffnung von dem durch das Umlenkelement umgelenkten Gasstrom vorteilhaft und mit einer hohen Zuverlässigkeit angeströmt werden. Durch einen im Wesentlichen laminaren Luftstrom stromaufwärts des Umlenkelements können somit Wassertropfen, welche sich in dem zentralen Bereich des Kanalgasstroms befinden, durch das Umlenkelement vorteilhaft in Richtung der zweiten Eintrittsöffnung gelenkt werden. Selbstverständlich ist es möglich, dass die Strömung stromabwärts des Umlenkelements turbulent ist. Somit kann durch die Anordnung des Einsatzes und durch die im Wesentlichen laminare Luftströmung stromaufwärts des Umlenkelements sowohl die erste Eintrittsöffnung als auch die zweite Eintrittsöffnung vorteilhaft mit Wasser beaufschlagt werden und der Wasserabscheider ist effizient und vorteilhaft einsetzbar.

Die Innenwandung des Einsatzes kann im Wesentlichen zylinderstumpfförmig geformt sein. Es ist möglich, dass der Einsatz stromabwärts einen grösseren Querschnitt aufweist als stromaufwärts. Es ist auch möglich, dass der Einsatz stromaufwärts einen grösseren Querschnitt aufweist als stromabwärts. Der Einsatz kann als Düse oder als Diffusor ausgebildet sein. Es ist möglich, dass der Einsatz Elemente enthält, welche den Gasstrom lenken. Dies können beispielsweise Schaufeln sein. Der Einsatzkann aus Metall oder Kunststoff gefertigt sein. Es ist möglich, dass der Einsatz aus einem Verbundwerkstoff gefertigt ist. Der Einsatz kann aus demselben Material gefertigt sein wie weitere Teile des Wasserabscheiders.

An der Innenwandung des Einsatzes, welche sich stromabwärts befindet, kann eine Gummilippe angeordnet sein. Zusätzlich kann die Innenwandung des Einsatzes, welche sich stromabwärts befindet, im Wesentlichen denselben Durchmesser aufweisen wie die Aussenwandung des Einlasses. Dann ist der Einsatz auf den Einlass steckbar und die Gummilippe dichtet den Bereich zwischen der Innenwandung des Einsatzes und der Aussenwandung des Einlasses ab. Es ist möglich, dass der Einsatz eine Erweiterung aufweist, in der der Innendurchmesser des Einsatzes grösser ist als der übrige Innendurchmesser des Einsatzes. Dann könne der Einsatz und der Einlass so ausgebildet sein, dass sich eine im Wesentlichen vorsprungs- und nutfreier Übergang von der Innenwand des Einsatzes zur Innenwand des Einlasses ergibt. So werden Luftverwirbelungen beim Übergang von Einsatz zu Einlass vermieden oder zumindest reduziert.

Es ist auch möglich, dass an der Aussenwandung des Einsatzes, welche sich stromabwärts des Einsatzes befindet, eine Gummilippe angeordnet ist und die Aussenwandung des Einsatzes im Wesentlichen denselben Durchmesser aufweist wie die Innenwandung des Einlasses. Dann ist der Einsatz in den Einlass steckbar und die Gummilippe dichtet den Bereich zwischen der Aussenwandung des Einsatzes und der Innenwandung des Einlasses ab. Es ist möglich, dass der Einlass eine Erweiterung aufweist, in der der Innendurchmesser grösser ist als der übrige Innendurchmesser des übrigen Strömungskanals. Dann könne der Einsatz und der Einlass so ausgebildet sein, dass sich eine im Wesentlichen vorsprungs- und nutfreier Übergang von der Innenwand des Einsatzes zur Innenwand des Einlasses ergibt. So werden Luftverwirbelungen beim Übergang von Einsatz zu Einlass vermieden oder zumindest reduziert.

Wenn der Einlass in den Einsatz gesteckt ist und/oder wenn der Einsatz in den Einlass gesteckt ist, können die beiden Bauteile mittels Rohrschellen oder Schlauchschellen fixiert werden. Es ist möglich, dass der Einlass und der Einsatz miteinander verschraubbar ausgebildet sind. Es ist möglich, dass der Einlass und der Einsatz mittels eines Bajonettverschlusses fixierbar sind. Es ist auch möglich, dass der Einsatz und der Einlass stoffschlüssig, beispielsweise durch Schweissen, verbunden sind.

Es ist möglich, dass der Einsatz so ausgebildet ist, dass hinter dem Einsatz ein Unterdruck entsteht. Dann wird der Luftstrom, welcher von dem Umlaufkanal in den Strömungskanal geleitet wird, zumindest teilweise durch den Unterdruck aus dem Umlaufkanal in den Strömungskanal gesaugt.

Die Aufgabe der Erfindung wird weiterhin durch eine Energieumwandlungsanlage gelöst, welche eine Brennstoffzelle und einen Wasserabscheider wie vorhergehend beschrieben umfasst.

In einer solchen Energieumwandlungsanlage kann sich stromabwärts des Wasserabscheiders eine Gasturbine befinden. Durch eine **Ab**scheidung des Wassers mittels des Wasserabscheiders wird verhindert, dass übermässig viel Wasser auf die Gasturbine trifft. Somit kann eine solche Gasturbine verschleissarm und langlebig betrieben werden. Dadurch ist die Energieumwandlungsanlage zuverlässig und langlebig.

Der Wasserabscheider kann in einem Abluftstrom der Energieumwandlungsanlage angeordnet sein. Eine Längsachse des Strömungskanals kann bei bestimmungsgemässem Gebrauch im Wesentlichen horizontal ausgebildet sein.

Durch eine horizontale Anordnung der Längsachse des Strömungskanals kann der Wasserabscheider so angeordnet werden, dass die Längsachse des Umlaufkanals zumindest teilweise im Wesentlichen vertikal angeordnet ist und dass die weitere Anordnung zum Abscheiden von Wasser bevorzugt auf einem tieferen Niveau angeordnet ist. Dann wirkt die Schwerkraft auf Wassertropfen in dem Umlaufkanal in Richtung Erdmittelpunkt und somit weg von dem Strömungskanal, welcher sich auf einem höheren Niveau befindet. Somit unterstützt die Schwerkraft wie vorhergehend Beschrieben die Funktion des Wasserabscheiders und ein äusserst vorteilhafter und effizienter Betrieb ist möglich.

Die Energieumwandlungsanlage kann so ausgebildet sein, dass der Wasserseparator einen Wasserablass und eine Verstellvorrichtung aufweist und der Wasserablass mittels der Verstellvorrichtung geöffnet oder geschlossen sein kann. Die Energieumwandlungsanlage kann eine Steuerung umfassen, die dazu ausgebildet ist, die Verstellvorrichtung so zu verstellen, dass in einem Zeitintervall der Wasserablass für eine Zeiteinheit geöffnet und für zwei bis sechs Zeiteinheiten geschlossen ist. Die Steuerung kann einen Füllstandssensor aufweisen.

Durch eine solche Verstellvorrichtung und Steuerung kann die Energieumwandlungsanlage für eine Vielzahl von Lastfällen effizient betrieben werden.

Der Füllstandssensor kann denn Füllstand des Wasserseparators messen. Dann kann die Steuerung die Verstellvorrichtung in Abhängigkeit von dem Füllstand des Wasserseparators verstellen. Der Füllstandssensor kann beispielsweise die elektrische Leitfähigkeit zwischen zwei Kontakten messen. Dann ist die elektrische Leitfähigkeit zwischen den Kontakten niedrig, wenn sich Luft zwischen den Kontakten befindet und hoch, wenn sich Wasser zwischen den Kontakten befindet. Es ist möglich, dass die Steuerung mehrere Füllstandssensoren umfasst.

Die Erfindung wird in den folgenden Figuren näher erläutert.

Hierbei zeigt:
- Figur 1:: Eine Ansicht eines Wasserabscheiders mit einem Wasserseparator,
- Figur 2:: eine Seitenansicht eines Wasserabscheiders,
- Figur 3:: einen Längsschnitt eines Wasserabscheiders,
- Figur 4:: eine Vorderansicht eines Wasserabscheiders,
- Figur 5:: einen Querschnitt eines Wasserabscheiders,
- Figur 6:: eine Ansicht eines Wasserabscheiders mit einem Umlaufkanal,
- Figur 7:: eine schematische Darstellung einer Energieumwandlungsanlage mit einem Wasserabscheider,
- Figur 8:: einen Längsschnitt eines Wasserabscheiders, wobei der erste Volutenkanal und der zweite Volutenkanal den gleichen Abstand von einer Längsachse des Strömungskanals aufweisen.

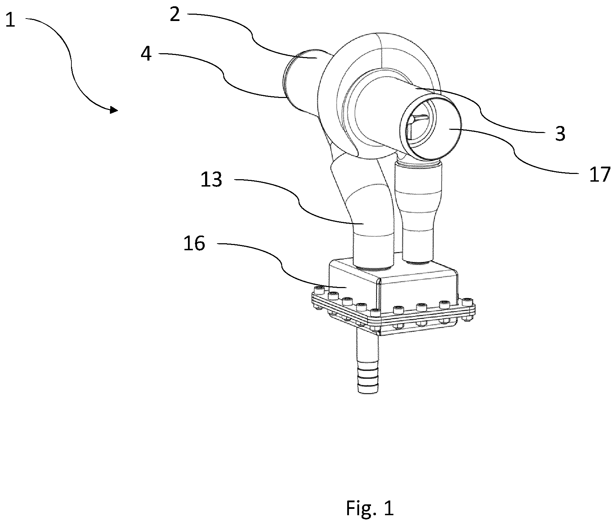

Figur 1 zeigt eine Ansicht eines Wasserabscheiders 1 mit einem Wasserseparator 16. Der Wasserseparator 16 ist auf einem tieferen Niveau angeordnet als der Wasserabscheider 1. Der Wasserabscheider 1 weisst einen Strömungskanal 2 auf. Der Strömungskanal 2 ist im Wesentlichen zylinderförmig ausgebildet. Der Strömungskanal 2 ist im Wesentlichen horizontal angeordnet. Der Strömungskanal 2 weist einen Einlass 3 sowie einen Auslass 4 auf. Ein Gasstrom ist von dem Einlass 3 durch den Strömungskanal 2 zu dem Auslass 4 leitbar. Stromaufwärts des Einlasses 3 ist ein Einsatz 17 angeordnet. Durch den Einsatz 17 ist ein Gasstrom im Wesentlichen laminar in den Einlass 3 leitbar. Der Einsatz 17 hat denselben Aussendurchmesser wie der Einlass 3 und ist mit diesem fugenlos stoffschlüssig verbunden. Der Wasserabscheider 1 weisst einen Umlaufkanal 13 auf. Der Umlaufkanal 13 verläuft um den Strömungskanal 2. Der Umlaufkanal 13 ist zumindest teilweise im Wesentlichen vertikal angeordnet. Der Umlaufkanal 13 verläuft von dem Strömungskanal zu einem Wasserseparator (16) und von dem Wasserseparator (16) zu dem Strömungskanal 2. Von dem Wasserseparator (16) verläuft ein im Wesentlichen vertikaler Schlauch, durch den Wasser von dem Wasserseparator (16) abgeschieden werden kann. Der Umlaufkanal 13 mündet stromabwärts in einem Winkel von im Wesentlichen 45° in den Strömungskanal 2.

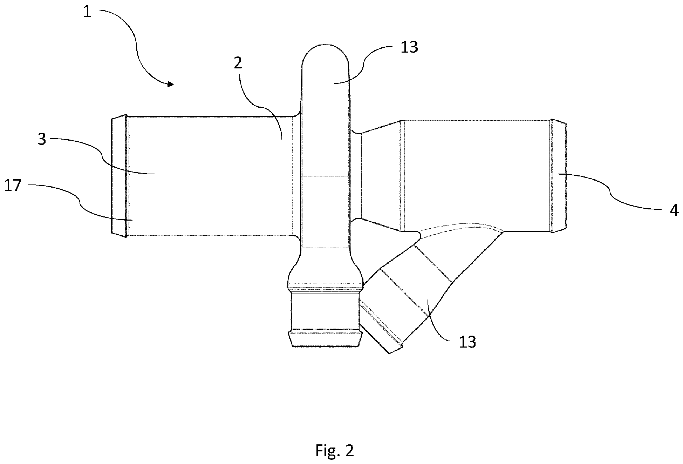

Figur 2 zeigt eine Seitenansicht eines Wasserabscheiders 1. Der Wasserabscheider 1 weist einen Strömungskanal 2 auf. Der Strömungskanal 2 ist im Wesentlichen zylinderförmig geformt. Der Strömungskanal 2 ist im Wesentlichen horizontal ausgebildet. Der Strömungskanal 2 weist einen Einlass 3 sowie einen Auslass 4 auf. Ein Gasstrom ist von dem Einlass 3 durch den Strömungskanal 2 zu dem Auslass 4 leitbar. Stromaufwärts des Einlasses 3 ist ein Einsatz 17 angeordnet. Durch den Einsatz 17 ist ein Gasstrom im Wesentlichen laminar in den Einlass 3 leitbar. Der Einsatz 17 hat denselben Aussendurchmesser wie der Einlass 3 und ist mit diesem fugenlos und stoffschlüssig verbunden. Der Wasserabscheider 1 weist einen Umlaufkanal 13 auf. Der Umlaufkanal 13 verläuft um den Strömungskanal 2. Der Umlaufkanal 13 ist zumindest teilweise im Wesentlichen vertikal angeordnet. Der Umlaufkanal 13 verläuft von dem Strömungskanal zu einem Wasserseparator 16 und von dem Wasserseparator 16 zu dem Strömungskanal 2. Somit wird ein Gasstrom von dem Strömungskanal 2 durch den Umlaufkanal 13 geleitet, wobei der Gasstrom durch den Umlaufkanal 13 stromabwärts wieder dem Strömungskanal 2 zugeführt wird. Der Umlaufkanal 13 mündet stromabwärts in einem Winkel von im Wesentlichen 45° in den Strömungskanal 2. Der Aussendurchmesser des Strömungskanals 2 weist eine Verjüngung auf. Der Einsatz 17 sowie der Auslass 4 weisen jeweils an ihrer Aussenseite einen Vorsprung auf, auf den andere Bauteile steckbar sind. Der Einsatz 17 sowie der Einlass 3 weisen einen grösseren Aussendurchmesser auf die der Auslass 4.

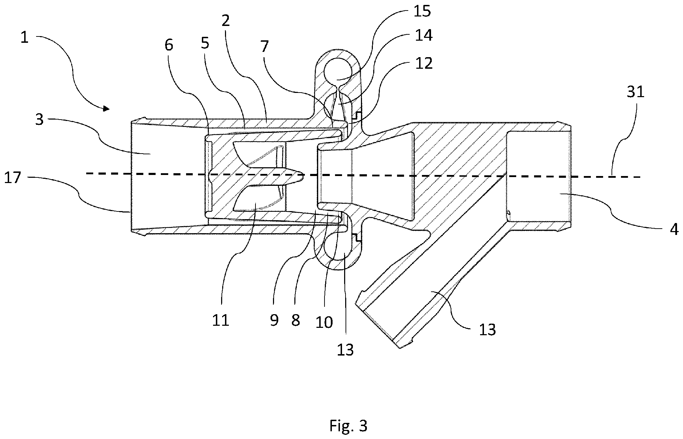

Figur 3 zeigt einen Längsschnitt eines Wasserabscheiders 1. Der Wasserabscheider 1 weist einen Strömungskanal 2 auf. Der Strömungskanal 2 ist im Wesentlichen zylinderförmig geformt. Die Längsachse 31 des Strömungskanals 2 ist im Wesentlichen horizontal angeordnet. Der Strömungskanal 2 weist einen Einlass und einen Auslass 4 auf. Stromaufwärts des Einlasses 3 ist ein Einsatz 17 angeordnet. Der Einsatz 17 ist mit dem Einlass 3 fugenlos und stoffschlüssig verbunden. Der Wasserabscheider 1 weist einen Umlaufkanal auf. Ein Gasstrom ist von dem Strömungskanal 2 in den Umlaufkanal 13 leitbar. Von dem Umlaufkanal 13 wird der Gasstrom stromabwärts wieder dem Strömungskanal 2 zugeführt. Der Wasserabscheider 1 weist einen ersten Abscheidekanal 5 sowie einen zweiten Abscheidekanal 8 auf. Der erste Abscheidekanal 5 reicht von der ersten Eintrittsöffnung 6 bis zu der Umlauföffnung 12. Ferner weist der erste Abscheidekanal 5 eine erste Austrittsöffnung 7 auf. Der zweite Abscheidekanal 8 reicht von der zweiten Eintrittsöffnung bis zur zweiten Austrittsöffnung 10. Im Bereich der zweiten Austrittsöffnung mündet der zweite Abscheidekanal 8 in den ersten Abscheidekanal 5. Die zweite Austrittsöffnung 10 ist so geformt, dass ein Gasstrom, welcher den zweiten Abscheidekanal 8 durch die zweite Austrittsöffnung 10 verlässt, einen Gasstrom, welcher in dem ersten Abscheidekanal 5 durch die erste Austrittsöffnung 7 geleitet wird, in Richtung der Umlaufkanalöffnung 12 ablenken kann. Dadurch wird der Effekt des ersten Abscheidekanals 5 verstärkt. Der Wasserabscheider 1 weist Umlenkelemente 11 auf, welche so angeordnet sind, dass ein Kanalgasstrom durch die Umlenkelemente 11 auf die zweite Eintrittsöffnung 9 des zweiten Abscheidekanals leitbar ist. Die Umlaufkanalöffnung 12 mündet in den Umlaufkanal 13. Der Umlaufkanal 13 verläuft um den Strömungskanal 12. Der Umlaufkanal 13 weisst einen ersten Volutenkanal 14 und einen zweiten Volutenkanal 15 auf. Der erste Volutenkanal 14 und der zweite Volutenkanal 15 sind zumindest teilweise durch eine schlitzförmige Öffnung verbunden.

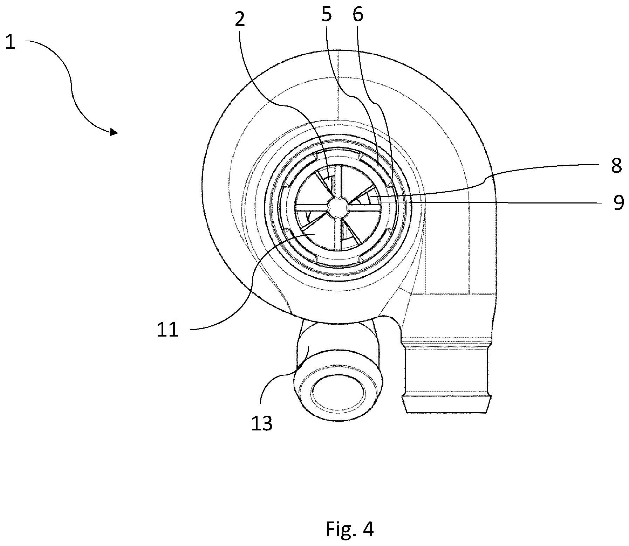

Figur 4 zeigt eine Vorderansicht eines Wasserabscheiders 1. Der Wasserabscheider 1 weist einen Strömungskanal 2 auf. In dem Strömungskanal 2 sind Umlenkelemente 11 angeordnet. In dem Strömungskanal 2 befindet sich ein erster Abscheidekanal 5 und ein zweiter Abscheidekanal 8. Der erste Abscheidekanal 5 weist eine erste Eintrittsöffnung 6 auf. Der zweite Abscheidekanal 8 weist eine zweite Eintrittsöffnung 9 auf. Der Wasserabscheider 1 weist einen Umlaufkanal 13 auf. Der Umlaufkanal 13 verläuft um den Strömungskanal 2. Ein Gasstrom ist durch den Strömungskanal 2 in den Umlaufkanal 13 leitbar. Stromabwärts des Strömungskanals 2 mündet der Umlaufkanal 13 wieder in den Strömungskanal 2. Ein Gasstrom ist somit durch den Strömungskanal 2 in den Umlaufkanal 13 und anschliessend wieder in den Strömungskanal 2 leitbar. Von dem Strömungskanal 2 kann ein Gasstrom durch den ersten Abscheidekanal 5 in den Umlaufkanal 13 und anschliessend wieder in den Strömungskanal 2 geleitet werden. Von dem Strömungskanal 2 kann ein Gasstrom durch den zweiten Abscheidekanal 8 in den Umlaufkanal 13 und anschliessend wieder in den Strömungskanal 2 geleitet werden. Der erste Abscheidekanal 5 und der zweite Abscheidekanal 8 laufen in dem Umlaufkanal 13 zusammen. In dem Umlaufkanal 2 sind Verstärkungselemente angeordnet. Die Umlenkelemente 11 sind an den Verstärkungselementen befestigt.

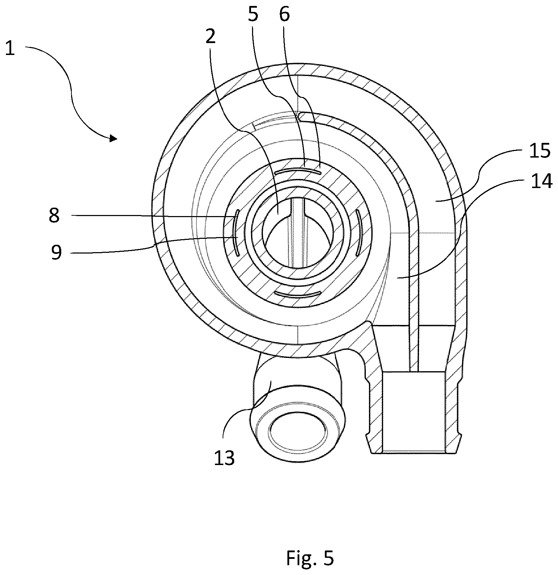

Figur 5 zeigt einen Querschnitt eines Wasserabscheiders 1. Der Wasserabscheider 1 weist einen Strömungskanal 2 auf. In dem Strömungskanal 2 ist ein erster Abscheidekanal 5 sowie ein zweiter Abscheidekanal 8 angeordnet. Der erste Abscheidekanal 5 weist eine erste Eintrittsöffnung 6 auf. Der zweite Abscheidekanal 8 weist eine zweite Eintrittsöffnung 9 auf. Der Umlaufkanal 13 verläuft um den Strömungskanal 2. Der Umlaufkanal 13 weist einen ersten Volutenkanal 14 und einen zweiten Volutenkanal 15 auf. Der zweite Volutenkanal 15 ist radial von der Längsachse (nicht dargestellt) des Strömungskanals 2 weiter entfernt als der erste Volutenkanal 14. Der Umlaufkanal 13 weisst abschnittsweise einen ersten Volutenkanal 14 sowie einen zweiten Volutenkanal 15 auf. Der erste Volutenkanal 14 sowie der zweite Volutenkanal 15 münden in einen Abschnitt des Umlaufkanals, welcher eine im Wesentlichen vertikal angeordnete Längsachse (nicht dargestellt) aufweist. Der erste Volutenkanal 14 und der zweite Volutenkanal 15 sind teilweise schneckenförmig ausgebildet, so dass sich der erste Volutenkanal 14 und der zweite Volutenkanal 15 in Strömungsrichtung des Umlaufkanals 13 radial zumindest teilweise weiter von der Längsachse (nicht dargestellt) des Strömungskanals 2 entfernen.

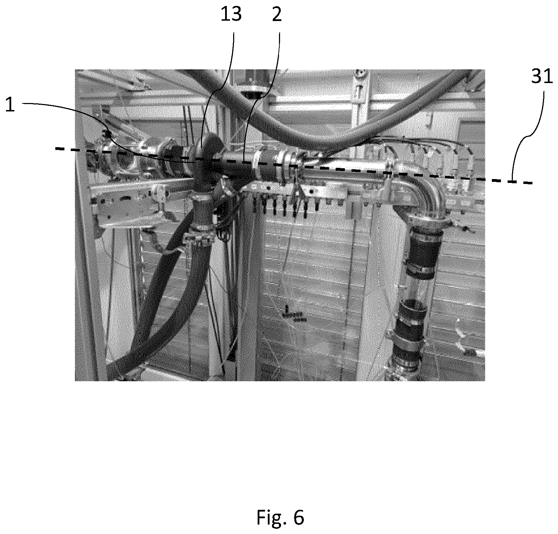

Figur 6 zeigt eine Ansicht eines Wasserabscheiders 1 mit einem Umlaufkanal 13. Der Wasserabscheider 1 ist zwischen zwei Rohren eingebaut. Der Wasserabscheider 1 weisst einen Strömungskanal 2 auf. Die Längsachse 31 des Strömungskanals 2 ist im Wesentlichen horizontal ausgerichtet. Der Umlaufkanal 13 verläuft auf einem Niveau unterhalb des Strömungskanals 2. Die Schwerkraft wirkt somit auf Wassertropfen in dem Umlaufkanal 13 zumindest in einer Richtung im Wesentlichen orthogonal weg von dem Umlaufkanal 2 in Richtung Erdmittelpunkt. Somit wird der Effekt des Wasserabscheiders 1 durch die Schwerkraft verstärkt.

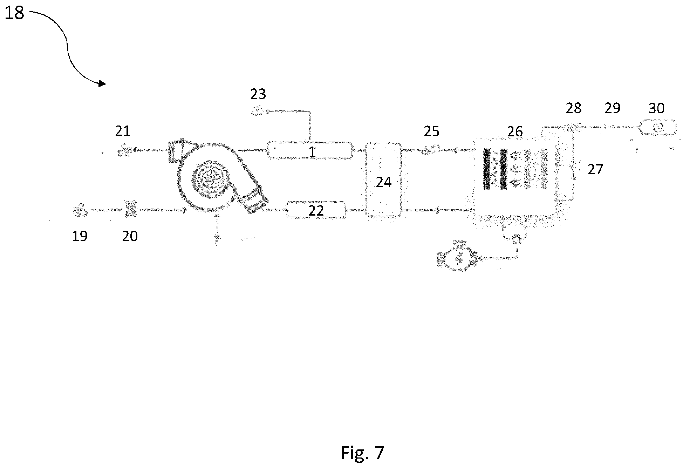

Figur 7 zeigt eine schematische Darstellung einer Energieumwandlungsanlage 18 mit einem Wasserabscheider 1. Umgebungsluft 19 wird durch einen Luftfilter 20 und einen Luftkühler zu einem Befeuchter 24 geleitet. Dort wird die Umgebungsluft 19 auf eine für den Betrieb der Brennstoffzelle 26 vorteilhafte Luftfeuchtigkeit gebracht. Die Umgebungsluft 19 wird in die Brennstoffzelle 26 geleitet. Von dem Wasserstoffdrucktank 30 wird Wasserstoff durch ein Ventil 29 mittels einer Einspritzung 28 und durch einen Tropfenabscheider 27 in die Brennstoffzelle 26 geleitet. Die Umgebungsluft 19 und der Wasserstoff reagieren in der Brennstoffzelle. Die Brennstoffzelle emittiert elektrischen Strom sowie ein Luftwassergemisch 25. Das Luftwassergemisch 25 wird durch den Befeuchter 24 zu dem Wasserabscheider 1 geleitet. Durch den Wasserabscheider 1 wird Wasser 23 abgeschieden. Zusätzlich emittiert der Wasserabscheider 1 Luft 21 an die Umgebung. Es ist möglich, dass der Luftbefeuchter 24 Wasser 23 von dem Wasserabscheider 1 bezieht. Dann kann der Luftbefeuchter 24 die Umgebungsluft 19, welche dem Luftbefeuchter durch den Luftfilter 20 sowie den Luftkühler 22 zugeführt wird, mit Wasser 23 von dem Wasserabscheider 1 befeuchten. Somit kann der Brennstoffzelle 26 ein für den Betrieb vorteilhaft befeuchtete Luft zugeführt werden.

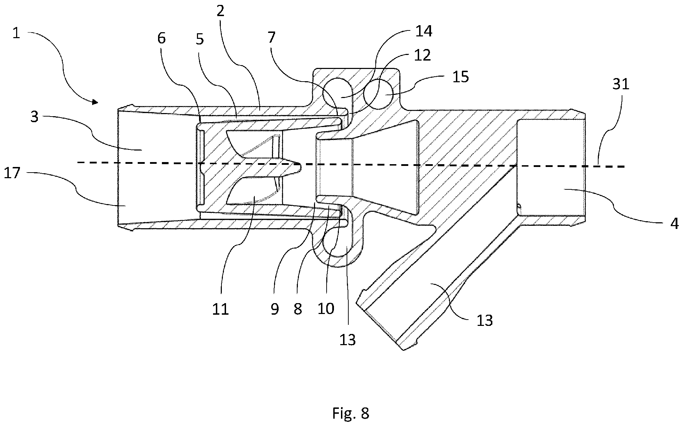

Figur 8 zeigt einen Längsschnitt eines Wasserabscheiders 1, wobei der erste Volutenkanal 14 und der zweite Volutenkanal 15 den gleichen Abstand von der Längsachse 31 des Strömungskanals 2 aufweisen. Der zweite Volutenkanal 15 ist in der Richtung der Längsachse 31 des Strömungskanals 2 weiter stromabwärts des Strömungskanals 2 angeordnet als der erste Volutenkanal 14.

Gleiche Bezugszeichen bezeichnen die gleichen Komponenten.

## Patentansprüche

1. Wasserabscheider (1), umfassend einen durch eine Wandung definierten Strömungskanal (2) mit einem Einlass (3) und einem Auslass (4), durch den ein Wasser (23) enthaltender Kanalgasstrom von dem Einlass (3) zu dem Auslass (4) hindurchführbar ist, wobei der Wasserabscheider (1) einen ersten Abscheidekanal (5) mit einer ersten Eintrittsöffnung (6) und einen zweiten Abscheidekanal (8) mit einer zweiten Eintrittsöffnung (9) aufweist, wobei die erste Eintrittsöffnung (6) und die zweite Eintrittsöffnung (9) an der Innenseite der Wandung des Strömungskanals (2) ausgebildet sind, wobei die erste Eintrittsöffnung (6) stromaufwärts von der zweiten Eintrittsöffnung (9) angeordnet ist, wobei der zweite Abscheidekanal (8) durch eine zweite Austrittsöffnung (10) in den ersten Abscheidekanal (5) mündet, wobei der erste Abscheidekanal (5) durch eine Umlaufkanalöffnung (12) in einen Umlaufkanal (13) mündet, wobei der Umlaufkanal (13) zumindest teilweise um den Strömungskanal (2) verläuft, wobei durch den ersten Abscheidekanal (5) ein erster Gasstrom leitbar ist und wobei durch den zweiten Abscheidekanal (8) ein zweiter Gasstrom leitbar ist, **dadurch gekennzeichnet, dass** die zweite Austrittsöffnung (10) so ausgebildet ist, dass durch die zweite Austrittsöffnung (10) der zweite Gasstrom so leitbar ist, dass durch den zweiten Gasstrom der erste Gasstrom in Richtung der Umlaufkanalöffnung (12) ablenkbar ist.

2. Wasserabscheider (1) nach Anspruch 1, **dadurch gekennzeichnet, dass** zwischen der ersten Eintrittsöffnung (6) und der zweiten Eintrittsöffnung (9) in dem Strömungskanal (2) mindestens ein Umlenkelement (11) ausgebildet ist, durch welches Wassertropfen, insbesondere in Richtung der zweiten Eintrittsöffnung (9), lenkbar sind.

3. Wasserabscheider (1) nach Anspruch 2, **dadurch gekennzeichnet, dass** der Bereich des Strömungskanals (2) zwischen der ersten Eintrittsöffnung (6) und der zweiten Eintrittsöffnung (9) im Wesentlichen zylinderförmig oder kegelstumpfförmig ausgebildet ist und der erste Abscheidekanal (5) zumindest teilweise, bevorzugt ringförmig, um den Bereich des Strömungskanals (2) mit dem Umlenkelement (11), angeordnet ist.

4. Wasserabscheider nach einem der vorhergehenden Ansprüche, **dadurch gekennzeichnet, dass** der erste Abscheidekanal (5) eine erste Austrittsöffnung (7) aufweist und der erste Abscheidekanal (5) im Bereich der ersten Eintrittsöffnung (6) eine grössere Querschnittsfläche aufweist als im Bereich der ersten Austrittsöffnung (7).

5. Wasserabscheider (1) nach einem der vorhergehenden Ansprüche, **dadurch gekennzeichnet, dass** der Umlaufkanal (13) schneckenförmig ausgebildet ist, so dass der Krümmungsradius des Umlaufkanals (13) zumindest teilweise entlang der Strömungsrichtung des Umlaufkanals (13) mit in Strömungsrichtung voranschreitender Ausdehnung des Umlaufkanals (13) grösser ausgebildet ist als in einem Bereich entgegen der Strömungsrichtung.

6. Wasserabscheider (1) nach einem der vorhergehenden Ansprüche, **dadurch gekennzeichnet, dass** der Umlaufkanal (13) einen ersten Volutenkanal (14) und einen zweiten Volutenkanal (15) aufweist, wobei der erste Volutenkanal (14) und der zweite Volutenkanal (15) so ausgebildet sind, dass sie im Betrieb des Wasserabscheiders (1) eine im Wesentlichen gleiche Druckverteilung des Gasstroms aufweisen.

7. Wasserabscheider (1) nach einem der vorhergehenden Ansprüche, **dadurch gekennzeichnet, dass** der Umlaufkanal (13) in den Strömungskanal (2) mündet.

8. Wasserabscheider (1) nach einem der vorhergehenden Ansprüche, **dadurch gekennzeichnet, dass** an dem Umlaufkanal (13) ein Wasserseparator (16) angeschlossen ist.

9. Wasserabscheider (1) nach einem der vorhergehenden Ansprüche, **dadurch gekennzeichnet, dass** stromaufwärts des Einlasses (3) ein Einsatz (17) ausgebildet ist, durch welchen der Kanalgasstrom im Wesentlichen laminar in den Einlass (3) leitbar ist.

10. Energieumwandlungsanalage (18) umfassend eine Brennstoffzelle (26) und einen Wasserabscheider (1) nach einem der Ansprüche 1 - 9.

11. Energieumwandlungsanlage (18) nach Anspruch 10, **dadurch gekennzeichnet, dass** der Wasserabscheider (1) in einem Abluftstrom der Energieumwandlungsanlage (18) angeordnet ist und eine Längsachse (31) des Strömungskanals (2) bei bestimmungemässem Gebrauch insbesondere im Wesentlichen horizontal ausgebildet ist.

12. Energieumwandlungsanlage (18) nach einem der Ansprüche 10 - 11, wobei der Wasserabscheider einen Wasserseparator (16) aufweist, welcher einen Wasserablass und eine Verstellvorrichtung umfasst, wobei der Wasserablass mittels der Verstellvorrichtung geöffnet oder geschlossen sein kann, **dadurch gekennzeichnet, dass** die Energieumwandlungsanlage eine Steuerung umfasst, die dazu ausgebildet ist, die Verstellvorrichtung so zu verstellen, dass in einem Zeitintervall der Wasserablass für eine Zeiteinheit geöffnet und für zwei bis sechs Zeiteinheiten geschlossen ist, wobei die Steuerung insbesondere einen Füllstandssensor umfasst.

## Claims

1. A water separator (1) comprising a flow channel (2) defined by a wall and having an inlet (3) and an outlet (4) through which a flow of channel gas containing water (23) can be passed from the inlet (3) to the outlet (4), wherein the water separator (1) has a first separation channel (5) with a first inlet opening (6) and a second separation channel (8) with a second inlet opening (9), wherein the first inlet opening (6) and the second inlet opening (9) are formed on the inside of the wall of the flow channel (2), the first inlet opening (6) being arranged upstream of the second inlet opening (9), wherein the second separation channel (8) opens into the first separation channel (5) through a second outlet opening (10), wherein the first separation channel (5) opens into a bypass channel (13) through a bypass channel opening (12), wherein the bypass channel (13) extends at least partially around the flow channel (2), wherein a first gas flow can be conducted through the first separation channel (5) and wherein a second gas flow can be conducted through the second separation channel (8), **characterized in that** the second outlet opening (10) is designed such that the second gas flow can be conducted through the second outlet opening (10) such that the first gas flow can be deflected in the direction of the circulation channel opening (12) by the second gas flow.

2. Water separator (1) according to claim 1, **characterized in that** at least one deflection element (11) is formed between the first inlet opening (6) and the second inlet opening (9) in the flow channel (2), through which water droplets can be deflected, in particular in the direction of the second inlet opening (9).

3. Water separator (1) according to claim 2, **characterized in that** the region of the flow channel (2) between the first inlet opening (6) and the second inlet opening (9) is essentially of cylindrical shape or truncated cone shape and the first separation channel (5) is arranged at least partially, preferably annularly, around the region of the flow channel (2) with the deflection element (11).

4. Water separator according to one of the preceding claims, **characterized in that** the first separation channel (5) has a first outlet opening (7) and the first separation channel (5) has a larger cross-sectional area in the region of the first inlet opening (6) than in the region of the first outlet opening (7).

5. Water separator (1) according to one of the preceding claims, **characterized in that** the bypass (13) is sprial shaped, so that the radius of curvature of the bypass (13) is larger at least partially along the flow direction of the bypass (13) with the extension of the bypass (13) advancing in the flow direction than in a region opposite to the flow direction.

6. Water separator (1) according to one of the preceding claims, **characterized in that** the bypass (13) has a first volute channel (14) and a second volute channel (15), the first volute channel (14) and the second volute channel (15) being designed such that they have an essentially equal pressure distribution of the gas flow during operation of the water separator (1).

7. Water separator (1) according to one of the preceding claims, **characterized in that** the bypass (13) opens into the flow channel (2).

8. Water separator (1) according to one of the preceding claims, **characterized in that** a gas dehydration unit (16) is connected to the bypass (13).

9. Water separator (1) according to one of the preceding claims, **characterized in that** an insert (17) is formed upstream of the inlet (3), through which the channel gas flow can be conducted into the inlet (3) in an essentially laminar manner.

10. Energy conversion system (18) comprising a fuel cell (26) and a water separator (1) according to any one of claims 1 - 9 .

11. Energy conversion plant (18) according to claim 10, **characterized in that** the water separator (1) is arranged in an exhaust air flow of the energy conversion plant (18) and a longitudinal axis (31) of the flow channel (2) is designed to be in particular essentially horizontal when used as intended.

12. Energy conversion plant (18) according to one of claims 10 - 11, wherein the water separator has a water dehydration unit (16) which comprises a water drain and a regulating mechanism, wherein the water drain can be opened or closed by means of the regulating mechanism, **characterized in that** the energy conversion plant comprises a controller which is designed to adjust the regulating mechanism in such a way that in a time interval the water drain is opened for one time unit and closed for two to six time units, wherein the controller comprises in particular a fill level sensor.

## Revendications

1. Séparateur d'eau (1) comprenant un canal d'écoulement (2) défini par une paroi et ayant une entrée (3) et une sortie (4) à travers lesquelles un débit de gaz de canal contenant de l'eau (23) peut être passé de l'entrée (3) à la sortie (4), le séparateur d'eau (1) ayant un premier canal de séparation (5) avec une première ouverture d'entrée (6) et un second canal de séparation (8) avec une seconde ouverture d'entrée (9), dans lequel la première ouverture d'entrée (6) et la deuxième ouverture d'entrée (9) sont formées sur la face intérieure de la paroi du canal d'écoulement (2), la première ouverture d'entrée (6) étant disposée en amont de la deuxième ouverture d'entrée (9), dans lequel le deuxième canal de séparation (8) débouche dans le premier canal de séparation (5) par une deuxième ouverture de sortie (10), dans lequel le premier canal de séparation (5) débouche dans un canal de dérivation (13) par une ouverture de dérivation (12), dans lequel le canal de dérivation (13) s'étend au moins partiellement autour du canal d'écoulement (2), dans lequel un premier débit de gaz peut être conduit à travers le premier canal de séparation (5) et dans lequel un deuxième débit de gaz peut être conduit à travers le deuxième canal de séparation (8), **caractérisé en ce que** la deuxième ouverture de sortie (10) est conçue de manière à ce que le deuxième débit de gaz puisse être conduit à travers la deuxième ouverture de sortie (10) de sorte que le premier débit de gaz puisse être dévié dans la direction de l'ouverture du canal d'écoulement (12) par le deuxième débit de gaz.

2. Séparateur d'eau (1) selon la revendication 1, **caractérisé en ce qu'**au moins un élément de déflexion (11) est formé entre la première ouverture d'entrée (6) et la deuxième ouverture d'entrée (9) dans le canal écoulement (2), à travers lequel les gouttelettes d'eau peuvent être déviées, en particulier en direction de la deuxième ouverture d'entrée (9).

3. Séparateur d'eau (1) selon la revendication 2, **caractérisé en ce que** la région du canal d'écoulement (2) entre la première ouverture d'entrée (6) et la deuxième ouverture d'entrée (9) est essentiellement de forme cylindrique ou tronconique et le premier canal de séparation (5) est disposé au moins partiellement, de préférence annulairement, autour de la région du canal d'écoulement (2) avec l'élément de déflexion (11).

4. Séparateur d'eau selon l'une des revendications précédentes, **caractérisé en ce que** le premier canal de séparation (5) présente une première ouverture de sortie (7) et que le premier canal de séparation (5) présente une aire sectionnelle plus grande dans la région de la première ouverture d'entrée (6) que dans la région de la première ouverture de sortie (7).

5. Séparateur d'eau (1) selon l'une des revendications précédentes, **caractérisé en ce que** la dérivation (13) est en forme de spire, de sorte que le rayon de courbure de la dérivation (13) est plus grand au moins partiellement le long de la direction d'écoulement de la dérivation (13) avec l'extension de la dérivation (13) avançant dans la direction d'écoulement que dans une région opposée à la direction d'écoulement.

6. Séparateur d'eau (1) selon l'une des revendications précédentes, **caractérisé en ce que** la dérivation (13) présente un premier canal en volute (14) et un second canal en volute (15), le premier canal en volute (14) et le second canal en volute (15) étant conçus de telle sorte qu'ils présentent une distribution de pression essentiellement égale du débit de gaz pendant le fonctionnement du séparateur d'eau (1).

7. Séparateur d'eau (1) selon l'une des revendications précédentes, **caractérisé en ce que** le passage de dérivation (13) débouche dans le canal d'écoulement (2).

8. Séparateur d'eau (1) selon l'une des revendications précédentes, **caractérisé en ce qu'**une unité de déshydratation du gaz (16) est connectée au passage dérivation (13).

9. Séparateur d'eau (1) selon l'une des revendications précédentes, **caractérisé en ce qu'**un insert (17) est formé en amont de l'entrée (3), à travers lequel le débit de gaz du canal peut être conduit dans l'entrée (3) de manière essentiellement laminaire.

10. Système de conversion d'énergie (18) comprenant une pile à combustible (26) et un séparateur d'eau (1) selon l'une quelconque des revendications 1 à 9.

11. Centrale de transformation d'énergie (18) selon la revendication 10, **caractérisée en ce que** le séparateur d'eau (1) est disposé dans un flux d'air d'échappement de la centrale de transformation d'énergie (18) et qu'un axe longitudinal (31) du canal d'écoulement (2) est conçu pour être en particulier essentiellement horizontal lorsqu'il est utilisé conformément à sa destination.

12. Centrale de transformation d'énergie (18) selon l'une des revendications 10 - 11, dans laquelle le séparateur d'eau a une unité de déshydratation d'eau (16) qui comprend une évacuation d'eau et un mécanisme de régulation, dans laquelle l'évacuation d'eau peut être ouverte ou fermée au moyen du mécanisme de régulation, **caractérisée en ce que** la centrale de transformation d'énergie comprend un contrôleur qui est conçu pour ajuster le mécanisme de régulation de telle sorte que dans un intervalle de temps l'évacuation d'eau est ouverte pendant une unité de temps et fermée pendant deux à six unités de temps, dans laquelle le contrôleur comprend en particulier un capteur de niveau de liquide.
